# EUROPEAN PATENT SPECIFICATION

(11) **EP 4 224 824 B1**
(45) Date of publication and mention of the grant of the patent: **03.12.2025**
(21) Application number: 21892129.4
(22) Date of filing: 29.09.2021
(51) Int. Cl.: H04M 1/02, H04M 1/72454, H04M 1/72469, H04M 1/72439

(54) **PORTABLE ELECTRONIC DEVICE HAVING FLEXIBLE DISPLAY**
TRAGBARE ELEKTRONISCHE VORRICHTUNG MIT FLEXIBLER ANZEIGE
DISPOSITIF ÉLECTRONIQUE PORTATIF COMPRENANT UN AFFICHAGE FLEXIBLE

(30) Priority: 16.11.2020 KR 20200152877; 22.01.2021 KR 20210009304
(43) Date of publication of application: 09.08.2023
(73) Proprietor: Samsung Electronics Co., Ltd., Suwon-si, Gyeonggi-do 16677 (KR)
(72) Inventor: KIM, Wankyu, Suwon-si Gyeonggi-do 16677 (KR); KIM, Raetae, Suwon-si Gyeonggi-do 16677 (KR); KIM, Youngseong, Suwon-si Gyeonggi-do 16677 (KR); PARK, Gyeongtae, Suwon-si Gyeonggi-do 16677 (KR); OH, Younghak, Suwon-si Gyeonggi-do 16677 (KR); LEE, Sangeun, Suwon-si Gyeonggi-do 16677 (KR)
(74) Representative: Gulde & Partner
(86) International application number: PCT/KR2021/013341
(87) International publication number: WO 2022/102959

(56) References cited:
- CN-B- 107 835 321
- KR-A- 20160 029 535
- KR-A- 20170 043 449
- KR-A- 20190 101 184
- KR-A- 20190 101 184
- KR-A- 20190 128 843
- US-A1- 2010 016 041
- US-A1- 2019 261 519

## Description

### [Technical Field]

Various embodiments relate to an electronic device having a structure configured to vary the size of an active area in which information is to be displayed on a display.

### [Background Art]

An electronic device may include a slidable (or rollable) housing structure. For example, the electronic device may include a first housing, a slidable housing including a second housing, a driver configured such that a part of the second housing moves into the first housing or moves out thereof, and a flexible display.

Conventional portable electronic devices including a slidable housing structure are disclosed in KR 2019 0101184 A and US 2010/016041 A1.

### [Disclosure of Invention]

### [Technical Problem]

In a slide-in state in which a part of the second housing is moved into the first housing, a part of the display may be moved toward the rear surface of the electronic device via a side surface of the electronic device and disposed thereon. During a state transition to a slide-out state in which the part of the second housing is moved out of the first housing, the part of the display moved toward the rear surface and disposed thereon may be moved to the front surface of the electronic device and disposed thereon.

The electronic device may activate only a part of the display and display visual information thereon. For example, the active area in which visual information is to be displayed may be substantially the entire area of the display in the slide-out state. A part of the display may be moved to the rear surface via a side surface in response to a state transition from the slide-out state to a partial slide-in state. The remainder other than the part moved to the rear surface may be determined as the active area. Meanwhile, when transitioning to a slide-in state, the part disposed on the rear surface of the electronic device may also be determined as the active area.

Various embodiments may provide an electronic device having a sliding structure in which a part of the display is moved from the front surface to the rear surface or from the rear surface to the front surface and disposed thereon, as described above, and the electronic device being configured to differently display visual information according to the state in which the display is disposed. For example, the electronic device may be configured such that a notification of an application (for example, telephone communication application, message application) is provided through a display area positioned on the rear surface or through a display area disposed on a side surface, and visual information corresponding to the notification is provided through the display area on the front surface according to a user response to such a notification.

Technical problems to be solved by the disclosure are not limited to the above-mentioned technical problems, and other technical problems not mentioned herein will be clearly understood from the following description by those skilled in the art to which the disclosure pertains

### [Solution to Problem]

The invention is defined by the appended set of claims. The description that follows is subjected to this limitation. Any disclosure lying outside the scope of said claims is only intended for illustrative as well as comparative purposes.

In various embodiments, a portable electronic device is provided, corresponding to the appended claims. The portable electronic device includes a first housing; a second housing capable of sliding with regard to the first housing; a driver configured such that a part of the second housing slides so as to be moved into the first housing or moved out of the first housing; a driving circuit including a motor and configured to rotate or move the driver by the motor; a flexible display configured such that, as the part of the second housing moved into the first housing is moved out of the first housing, an area positioned on a rear surface of the portable electronic device moves to a front surface of the portable electronic device via a side surface of the portable electronic device; a wireless communication circuit; a sensor comprising at least one of a gyro sensor and an acceleration sensor, wherein the sensor (320) is configured to acquire data corresponding to a relative position between the front surface and the rear surface; a processor operatively connected to the driving circuit, the wireless communication circuit, the sensor, and the flexible display; and a memory connected to the processor. The memory may store instructions which, when executed, cause the processor to identify, based on data received from the sensor, that the rear surface is positioned above the front surface, while the rear surface is positioned above the front surface, provide a notification regarding a message received from an external electronic device through the wireless communication circuit through a display area of the flexible display positioned on the rear surface, identify, based on data received from the sensor, that the front surface is positioned above the rear surface, provide the notification through a display area of the flexible display positioned on the front surface according to a transition from a state in which the rear surface is positioned above the front surface to a state in which the front surface is positioned above the rear surface, control the driving circuit to rotate or move the driver for sliding the second housing so as to be moved out of the first housing such that the display area of the flexible display positioned on the rear surface is moved to and disposed on the front surface according to selection information regarding the notification in a state in which the front surface is positioned above the rear surface, thereby expanding a front-surface display area of the portable electronic device, and provide a user interface (UI) element related to the notification according to the selection information through a display area expanded to the front surface.

### [Advantageous Effects of Invention]

Various embodiments may provide an electronic device configured to be able to variously interact with the user in connection with a message or a push notification received from the outside, by using a sliding structure in which a part of a display is moved from the front surface to the rear surface or from the rear surface to the front surface and disposed thereon. Various other advantageous effects identified explicitly or implicitly through the disclosure may be provided.

### [Brief Description of Drawings]

FIG. 1 is a block diagram of an electronic device inside a network environment according to various embodiments.
FIG. 2A, FIG. 2B, and FIG. 2C illustrate a portable electronic device having a sliding structure according to an embodiment.
FIG. 3 illustrates an electric block configuration of a portable electronic device having a sliding structure according to various embodiments.
FIG. 4 is a diagram for describing an embodiment of an operation in which a processor supports a UI regarding a notification.
FIG. 5 to FIG. 9 are diagrams for describing other embodiments of an operation in which a processor supports a UI regarding a notification.
FIG. 10 illustrates operations performed by a processor according to various embodiments.

### [Mode for the Invention]

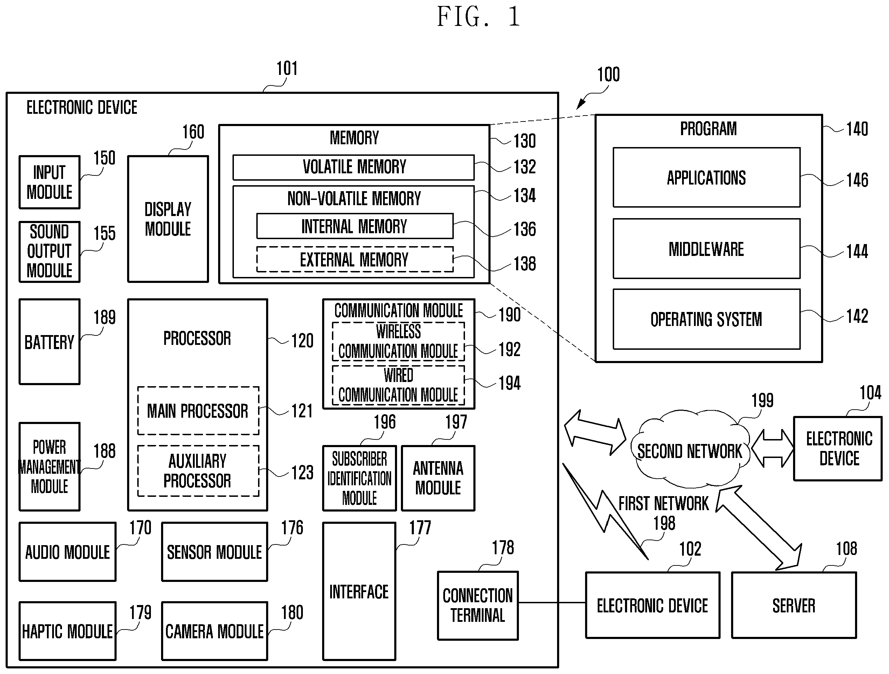

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

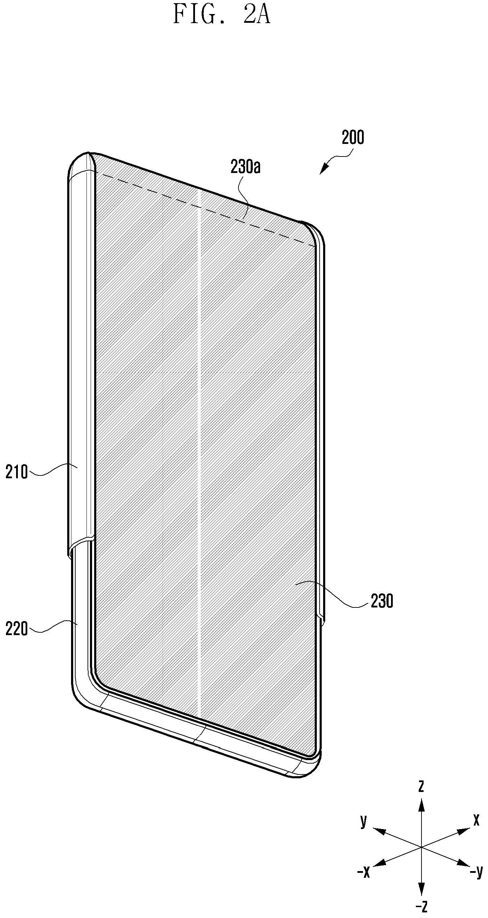

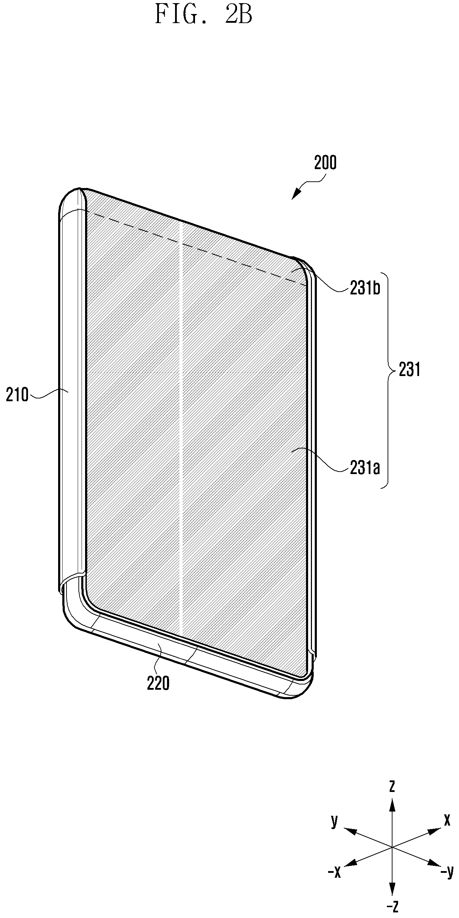

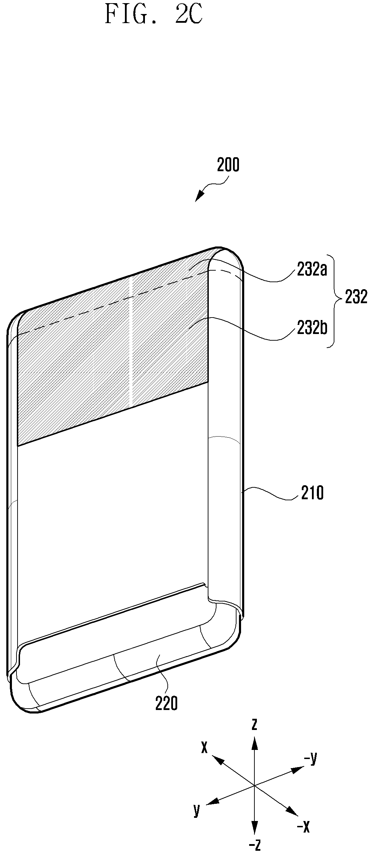

FIG. 2A, FIG. 2B, and FIG. 2C illustrate a portable electronic device 200 having a sliding structure according to an embodiment. Although a vertically sliding structure is given as an example herein, the portable electronic device may include a horizontally sliding structure. Referring to FIG. 2A, FIG. 2B, and FIG. 2C, the portable electronic device 200 (for example, the electronic device 101 in FIG. 1) may include a first housing 210, a second housing 220, a driver (for example, a roller (not illustrated) configured to rotate or move by means of power (for example, a force from a motor, a force from an elastic body, or a force from a pressurizing structure), a pinion gear (not illustrated), a rack gear (not illustrated), a worm gear (not illustrated), a slider, or various hinges (not illustrated)) configured such that a part of the second housing 220 is moved into the first housing 210 or moved out of the first housing 210, and a flexible display 230 disposed in a space formed by a slidable housing 210, 220 including the first housing and the second housing.

The second housing 220 may be divided into a portion which can move into the first housing 210 (hereinafter, referred to as an inwardly movable portion) and a portion which remains exposed to the outside. FIG. 2A illustrates a state in which the inwardly movable portion of the second housing 220 is fully moved out of the first housing 210 (for example, an extended state, a slide-out state, a roll-out state, which will hereinafter be referred to as a slide-out state as a whole). FIG. 2B and FIG. 2C illustrate a state in which the inwardly movable portion of the second housing 220 is fully moved into the first housing 210 (for example, a normal state, a reduced state, a slide-in state, a roll-in, which will hereinafter be referred to as a slide-in state as a whole). FIG. 2C illustrates the portable electronic device in FIG. 2B rotated clockwise around the Z-axis by 180°.

In a slide-out state, the portable electronic device 200 may have a structure in which substantially all of the display 230 is moved to the front surface (for example, the surface faxing in the x axis direction in FIG. 2) of the portable electronic device 200 and disposed thereon. Most of the display 230 may be disposed on the front surface, and a part 230a may be disposed on a side surface in a bent shape.

As the inwardly movable portion of the second housing 220 moves into the first housing 210, a part of the display may be moved to the rear surface (for example, the surface facing in the -x axis direction in FIG. 2A and FIG. 2B, the surface facing in the y axis direction in FIG. 2C) via a side surface of the portable electronic device 200 and disposed thereon.

In a slide-in state, the portable electronic device 200 may have a structure in which the display 230 is disposed more widely on the front surface than on the rear surface, as illustrated in FIG. 2B and FIG. 2C.

In a slide-in state, the display 230 may be divided into a first display area 231 and a second display area 232. For example, the first display area 231 may be divided into a first portion 231a of the first display area, which is mostly disposed on the front surface in a flat shape, and a second portion 231b of the first display area, which extends therefrom, and which is partially disposed on a side surface in a bent shape. The second display area 232 may be divided into a first portion 232a of the second display area, which extends from the second portion 231b of the first display area 231, and which is partially disposed on the side surface in a bent shape, and a second portion 232b of the second display area, which extends therefrom, and which is mostly disposed on the rear surface in a flat shape.

According to an embodiment, the state of the portable electronic device 200 may be defined, based on the rotational angle of the roller (for example, the angle of rotation of the roller in the direction in which the roller is unwound from the display 230 (for example, in the clockwise direction)). For example, when the rotational angle of the roller is above a first threshold value, the state of the electronic device 200 may be recognized as a slide-in state. When the rotational angle of the roller exceeds a second threshold value larger than the first threshold value, the state of the electronic device 200 may be recognized as a slide-out state (for example, an extended state, a slide-out state). The portable electronic device 200 may remain in a state in which the inwardly movable portion is not fully moved out of the first housing 210, and a part thereof exists inside the first housing 210. In such a state (for example, an intermediate state, a free-stop state, which will hereinafter be referred to as an intermediate state as a whole), the size of the display area disposed on the front surface may be smaller than that in the slide-out state.

According to an embodiment, the portable electronic device 200 may determine the portion of the display 230, which is disposed on the front surface, as an active area in which visual information (for example, an application execution screen) is to be displayed. For example, in the slide-in state, the portable electronic device 200 may determine the first display area 231 as the active area, and may deactivate the second display area 232. In the slide-out state, the portable electronic device 200 may determine the entire display 230 as the active area. In the intermediate state, the portable electronic device 200 may determine the display area disposed on the front surface, excluding the rear surface, as the active area in which visual information is to be displayed.

According to an embodiment, the active area may be determined, based on the relative position between the front and rear surfaces. For example, a gyro sensor and/or an acceleration sensor may be used to recognize the relative position. For example, when the rear surface is recognized as being positioned above the front surface, the portable electronic device 200 may determine the portion of the display 230, which is disposed on the rear surface, as the active area, and may deactivate the portion disposed on the front surface. When the front surface is recognized as being positioned above the rear surface, the portable electronic device 200 may determine the portion of the display 230, which is disposed on the front surface, as the active area, and may deactivate the portion disposed on the rear surface.

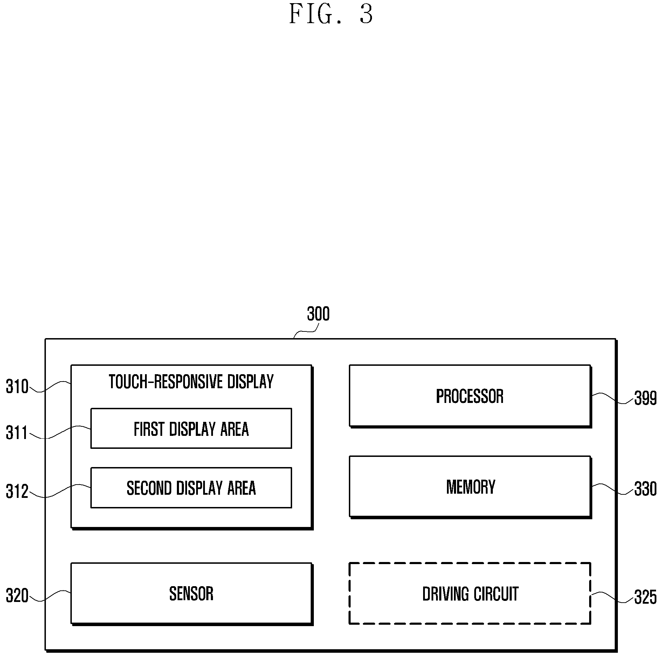

FIG. 3 illustrates an electric block configuration of a portable electronic device 300 having a sliding structure according to various embodiments. The portable electronic device 300 (for example, the electronic device 101 in FIG. 1) may be configured to provide a notification through a display area disposed on the rear surface of the portable electronic device 300 when the rear surface is above the front surface, and support a user interface (UI) for interaction with the user with regard to the notification, based on a user response to the notification (for example, a manipulation for flipping the portable electronic device 300 such that, while the rear surface is positioned above the front surface, the front surface faces upwards, or an operation of making a touch swipe from the rear surface to a side surface). Referring to FIG. 3, the portable electronic device 300 may include a touch-responsive display 310, a sensor 320, a driving circuit 325, a memory 330, and a processor 399.

The display 310 may be divided into a first display area 311 and a second display area 312. For example, the first display area 311 may be a portion (for example, the first display area 231 in FIG. 2B) which remains visually exposed through the front surface of the portable electronic device 300. The second display area 312 may be a portion (for example, the second display area 232 in FIG. 2C) which can be moved from the front surface to the rear surface via a side surface and disposed thereon.

The sensor 320 (for example, the sensor module 176 in FIG. 1) may generate data used to recognize the state of the slidable housing (for example, a slide-in state, a slide-out state, an intermediate state) and may transmit the data to the processor 399. For example, the sensor 320 may include a sensor (for example, an encoder, a hall sensor) attached to the roller such that, when the roller rotates, the sensor generates and outputs data corresponding to the angle of rotation. The position in which the sensor is attached and the type of sensing data are not limited thereto. For example, a structure configured to generate one of a change in permittivity, a change in light, a change magnetic flux, and a change in resistance in response to a housing movement may be disposed inside the housing, and the sensor 320 may include a touch sensor, an optical sensor, a magnetic sensor, a resistance-sensing sensor, or the like according to each of the above-mentioned structures. Particularly, in the case of a roller-bar type in which the roller cannot rotate, but can play only the role of guiding the display so as to move, the above-mentioned sensors irrelevant to the angle of rotation may be disposed.

The sensor 320 may recognize the relative position of the front and rear surfaces of the portable electronic device 300 and output data indicating the recognized relative position to the processor 399. For example, the sensor 320 may include a gyro sensor and/or an acceleration sensor for recognizing the relative position.

The driving circuit 325 may include a power source for delivering power to the driver or a circuit related to the power source. For example, the driving circuit 325 may include a motor for rotating the driver, such as a roller, and a motor driving circuit. The driving circuit 325 may rotate the roller under the control of the processor 399 such that the inwardly movable portion of the second housing 220 is moved into the first housing 210 or moved out of the first housing 210. Driving that enables sliding is also made possible by rotation of a motor and interworking between pinion/rack gear, instead of rotation of the roller, and the driving circuit or structure is not limited in the disclosure.

The memory 330 may store instructions which cause the processor 399 to perform a do-not-disturb mode when the rear surface is above the front surface. For example, when a message is received from an external electronic device through a wireless communication circuit while the rear surface is above the front surface, the processor 399 may forbid a sound output for notifying the user that the message has been received, and may provide a notification through a display area (for example, second display area 312) positioned on the rear surface.

The memory 330 may store instructions which cause the processor 399 to control a function such that a notification is provided through a display area (for example, second display area 312) positioned on the rear surface when the rear surface is above the front surface and, according to a user response to the notification (for example, a manipulation of flipping the portable electronic device 300 being sensed through the sensor 320, or a touch swipe input from the rear surface to a side surface being sensed), a visual effect is provided so as to simulate a movement of the notification from the rear surface to the display area (for example, first display area 311) positioned on the front surface via the side surface, as if it were flowing water. For example, the notification may include content indicating that a message (for example, a chatting (or instant) message, a social networking service (SNS) message, a software update message, a call (for example, voice call, video call) request message, push notification message) is received from an external electronic device through the wireless communication module 192. The notification may include at least a part of the content of the received message. The notification may include information (for example, name, telephone number) of the counterpart who has requested a call.

The memory 330 may store instructions which cause the processor 399 to perform a function such that a first UI element for receiving a user response to the notification moved from the rear-surface display area to the front-surface display area is displayed through the front-surface display area, the driving circuit 325 is driven according to the user response to the first UI element so as to expand the front-surface display area, and a second UI element is provided through the expanded front-surface display area. For example, the first UI element may include a text, a button, an icon, or a menu. The second UI element may include a keypad or a screen for executing an application related to the notification. The first UI element may include a first button and a second button. The processor 399 may control the driving circuit 325 such that a part of the display area disposed on the rear surface is moved to the front surface and disposed thereon according to a user response to the first button, thereby expanding the front-surface display area, and a keypad is provided through the expanded front-surface display area. The processor 399 may control the driving circuit 325 such that the entire display area disposed on the rear surface is moved to the front surface and disposed thereon according to a user response to the second button, thereby expanding the front-surface display area to the maximum size, and an application execution screen is provided through the expanded front-surface display area.

The processor 399 (for example, the processor 120 in FIG. 1) may be operatively connected to the display 310, the sensor 320, the driving circuit 325, and the memory 330. The processor 399 may be configured to perform operations defined by the instructions stored in the memory 330. Operations of the processor 399 will be described below in detail. In addition, additional operations of the processor 399 will be described below.

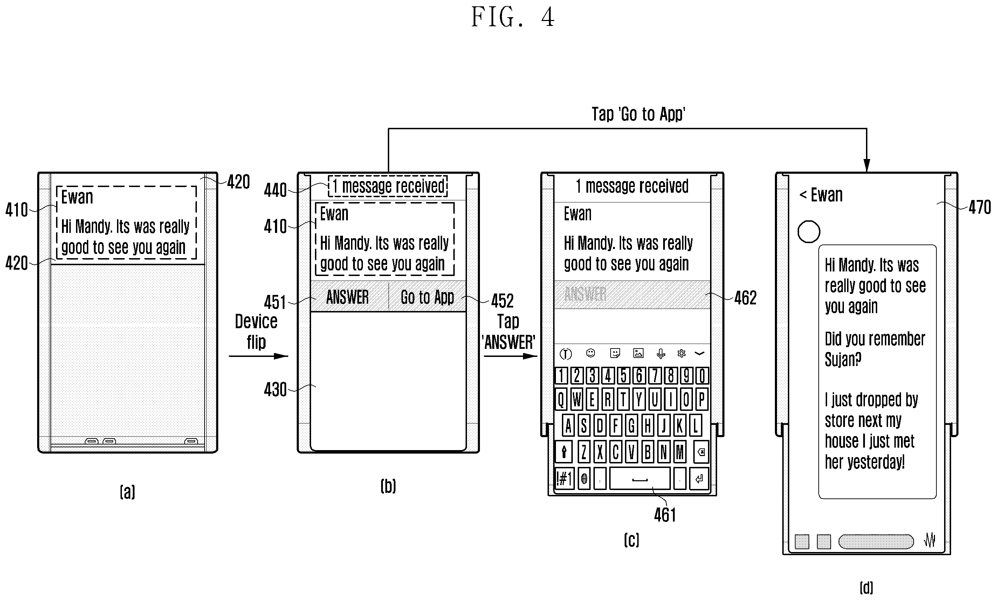

FIG. 4 is a diagram for describing an embodiment of an operation in which the processor 399 supports a UI regarding a notification.

Referring to FIG. 4A, the processor 399 may sense the rear surface of the portable electronic device being positioned above the front surface, based on data received from the sensor 320. While the rear surface remains positioned above the front surface, the processor 399 may receive a chatting message from an external electronic device through the wireless communication circuit, and may provide a notification (for example, message content) 410 regarding the received message through the rear-surface display area 420 (for example, the second display area 232 in FIG. 2C).

Referring to FIG. 4B, the processor 399 may sense, through data received from the sensor 320, a user reaction intended to flip the portable electronic device such that the front surface is positioned above the rear surface. According to such a user reaction, the processor 399 may provide a visual effect so as to simulate a (successive) movement of the notification content 410 from the rear-surface display area 420 to the front-surface display area 430 via a side-surface display area, as if it were flowing water. The message content 410 may be displayed with a visual effect such that, after being turned upside down from the content displayed in the rear-surface display area 420, the message content 410 moves successively. The user may have more natural and effective experiences in connection with checking the message content and replying thereto, through the flipping operation and operations described below. After moving the message content 410 to the front-surface display area 430, the processor 399 may provide additional information (for example, the number of received messages) 440 related to the notification through a side surface or an area adjacent to the side surface (for example, the second portion 231b of the first display area in FIG. 2B). The processor 399 may provide a first button 451 operatively connected to a first function related to the message content 410 and a second button 452 operatively connected to a second function related to the message content 410, through the front-surface display area 430. The processor 399 may display a text (for example, Answer) so as to be included in the first button 451 such that the user can identify the first function as a function that enables the user to reply to received messages without entering the corresponding chatting application. The processor 399 may display a text (for example, Go to App) so as to be included in the second button 452 such that the user can identify the second function as a function that enables the user to enter the chatting application and to reply to received messages.

Referring to FIG. 4C, in response to a user input regarding the first button 451, the processor 399 may drive the driving circuit 325 such that the state of the slidable housing transitions from a slide-in state to an intermediate state (for example, such that a part of the inwardly movable portion of the second housing 220 is moved out of the first housing 210), thereby expanding the front-surface display area. The processor 399 may provide a keyboard 461 and a replay display window 462 in connection with the first button 451, instead of the first button 451 and the second button 452, through the expanded front-surface display area.

Referring to FIG. 4D, in response to a user input regarding the second button 452, the processor 399 may drive the driving circuit 325 such that the state of the slidable housing transitions from a slide-in state to a slide-out state (for example, such that the inwardly movable portion is entirely moved out of the first housing 210), thereby expanding the front-surface display area to the maximum size. The processor 399 may provide a chatting application execution screen (for example, a dialog window) 470 through the expanded front-surface display area.

The transition from FIG. 4A to FIG. 4C or FIG. 4D may occur instantly according to a default value preconfigured by the user, without the process of selecting the first button 451 or the second button 452 in FIG. 4B. For example, provided that the user has preconfigured the second function as the default value, the processor 399 may drive the driving circuit 325 such that the state of the slidable housing transitions from a slide-in state to a slide-out state (for example, such that the inwardly movable portion is entirely moved out of the first housing 210) as in FIG. 4D, thereby expanding the front-surface display area to the maximum size, in response to sensing a user reaction intended to flip the portable electronic device such that the front surface is positioned above the rear surface, from data received from the sensor 320. The processor 399 may provide a chatting application execution screen (for example, a dialog window) 470 through the expanded front-surface display area.

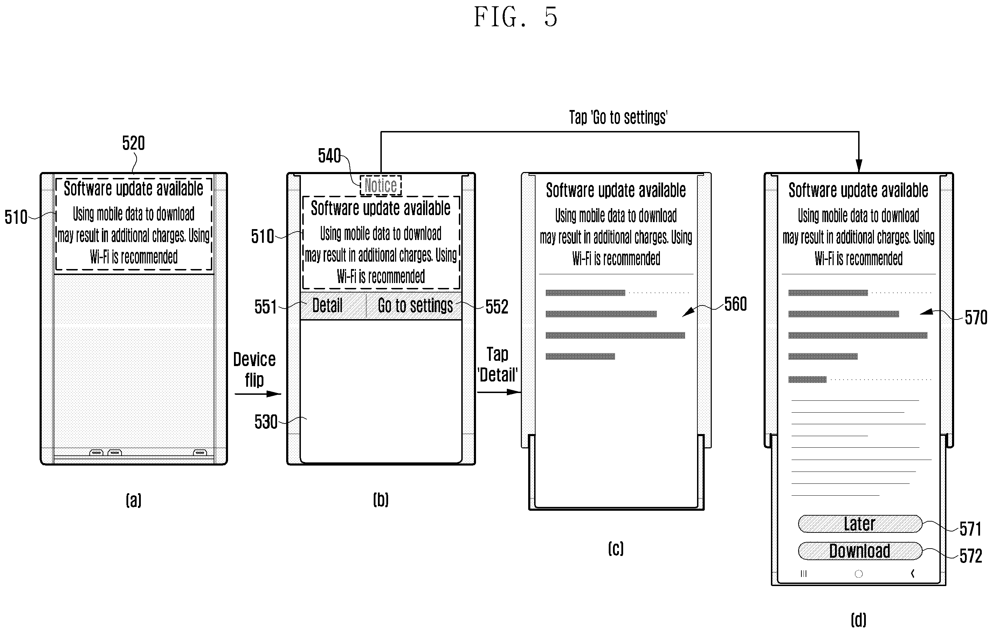

FIG. 5 to FIG. 9 are diagrams for describing other embodiments of an operation in which the processor 399 supports a UI regarding a notification. In the following description with reference to FIG. 5 to FIG. 9, identical descriptions as those with reference to FIG. 4 will be omitted or made brief.

Referring to FIG. 5A, while the rear surface is positioned above the front surface, the processor 399 may receive a software update message from an external electronic device through the wireless communication circuit, and may provide a notification (for example, an update-related recommendation) 510 regarding the received message through the rear-surface display area 520.

Referring to FIG. 5B, the processor 399 may receive a user response intended to flip the portable electronic device from the sensor 320. The processor 399 may provide a visual effect so as to simulate a movement of the recommendation 510 from the rear-surface display area 520 to the front-surface display area 530, as if it were flowing water, according to such a user response. After the recommendation 510 is moved to the front-surface display area 530, the processor 399 may provide a text (for example, Notice) 540 for notifying the user that there is an update item, through a side-surface area or an area adjacent to the side surface. The processor 399 may provide a first button 551 operatively connected to a first function related to the update item and a second button 552 operatively connected to a second function related to the update item, through the front-surface display area 530. The processor 399 may display a text (for example, Detail) so as to be included in the first button 551 such that the user can identify the first function as a function for displaying the summary of the update item. The processor 399 may display a text (for example, Go to settings) so as to be included in the second button 552 such that the user can identify the second function as a function for installing detailed information of the update item and the update item in the portable electronic device.

Referring to FIG. 5C, in response to a user input regarding the first button 551, the processor 399 may control the driving circuit 325 such that a part of the rear-surface display area 520 is moved toward the front surface and disposed thereon, thereby expanding the front-surface display area. The processor 399 may provide an update item summary 560, instead of the first button 551 and the second button 552, through the expanded front-surface display area.

Referring to FIG. 5D, in response to a user input regarding the second button 552, the processor 399 may control the driving circuit 325 such that the rear-surface display area 520 is entirely moved toward the front surface and disposed thereon, thereby expanding the front-surface display area to the maximum size. The processor 399 may provide a configuration screen 570 including detailed information, a button 571 for downloading now, and a button 572 for downloading later, instead of the first button 551 and the second button 552, through the expanded front-surface display area.

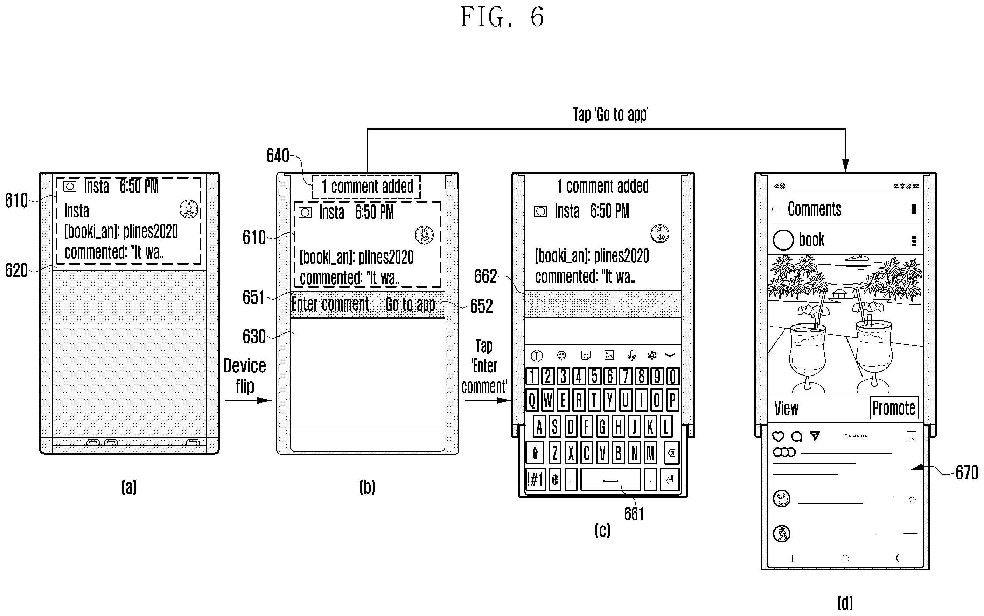

Referring to FIG. 6A, the processor 399 may receive a message related to a designated SNS account from an external electronic device through the wireless communication circuit while the rear surface is positioned above the front surface, and may provide a notification regarding the received message (for example, a new posting in the corresponding SNS account, or partial content of a comment in response thereto) 610 through the rear-surface display area 620.

Referring to FIG. 6B, the processor 399 may provide, according to a user response intended to flip the portable electronic device, a visual effect so as to simulate a movement of the partial content 610 from the rear-surface display area 620 to the front-surface display area 630, as if it were flowing water. After the partial content 610 is moved to the front-surface display area 630, the processor 399 may provide additional information related to the notification (for example, the number of comments) 640 through a side-surface area or an area adjacent to the side surface. The processor 399 may provide a first button 651 operatively connected to a first function related to the partial content 610 and a second button 652 operatively connected to a second function related to the partial content 610, through the front-surface display area 630. The processor 399 may display a text (for example, Enter comment) so as to be included in the first button 651 such that the user can identify the first function as a function enabling the user to compose comments without entering the corresponding SNS application. The processor 399 may display a text (for example, Go to app) so as to be included in the second button 652 such that the user can identify the second function as a function enabling the user to enter the SNS application and to compose comments.

Referring to FIG. 6C, the processor 399 may control the driving circuit 325, in response to a user input regarding the first button 651, so as to expand the front-surface display area to a first size designated such that comments can be composed, without entering the SNS application. The processor 399 may provide a keyboard 661 and a comment display window 662, instead of the first button 651 and the second button 652, through the expanded front-surface display area.

Referring to FIG. 6D, the processor 399 may control the driving circuit 325, in response to a user input regarding the second button 652, so as to expand the front-surface display area to a second size (for example, maximum size) configured such that an SNS application execution screen is displayed. The processor 399 may provide the SNS application execution screen (for example, the home page of the corresponding SNS account) 670 through the expanded front-surface display area.

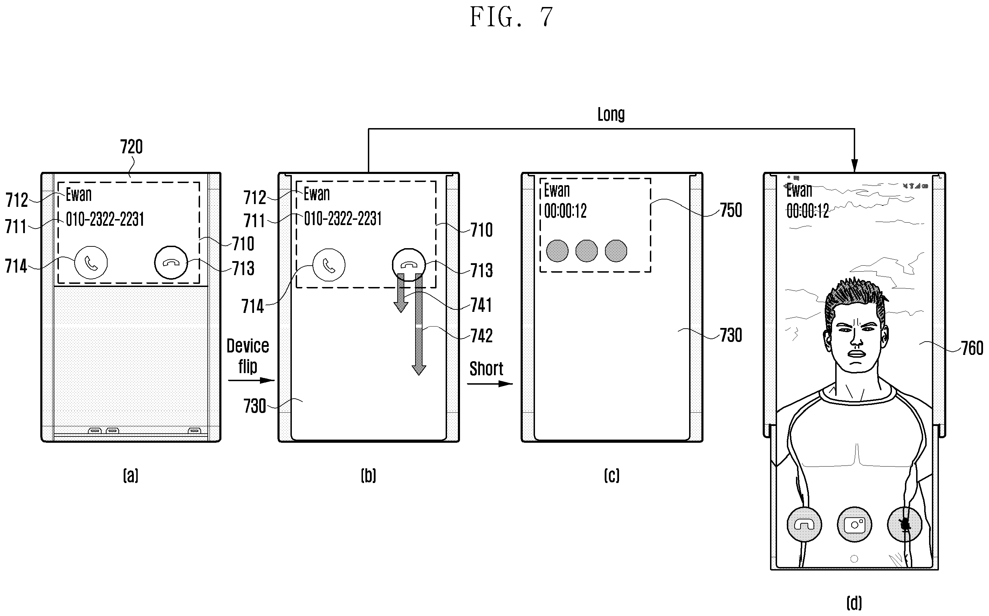

Referring to FIG. 7A, while the rear surface is positioned above the front surface, the processor 399 may receive a call request message from an external electronic device through the wireless communication circuit, and may provide a call request notification 710 through the rear-surface display area 720. Upon receiving a voice call request message, the processor 399 may acquire a telephone number inside the message, may acquire a name from contact information corresponding to the telephone number from a contact list, and compose a call request notification 710 including the acquired telephone number 711, the name 712, a call button 713, and a cancel button 714, and may provide the same through the rear-surface display area 720. If the contact list includes no contact information corresponding to the telephone number, the name 712 may be omitted from the call request notification 710. If the contact list includes contact information corresponding to the telephone number, the telephone number 711 may be omitted from the call request notification 710.

Referring to FIG. 7B, the processor 399 may provide, according to a user response intended to flip the portable electronic device, a visual effect so as to simulate a successive movement of the call request notification 710 from the rear-surface display area 720 to the front-surface display area 730 via a side-surface display area, as if it were flowing water.

Referring to FIG. 7B and FIG. 7C, the processor 399 may sense the distance of movement of a touch gesture, which has started from the call button 713, through a touch sensor. Alternatively, the strength of force generated by touching the call button 713 may be sensed through a pressure sensor. If the sensed first movement distance 741 (for sensed strength of force) is below designated reference value, the processor 399 may provide a call application execution screen 750 through the front-surface display area 730 such that a voice call is performed instead of a video call.

Referring to FIG. 7B and FIG. 7D, if the sensed second movement distance 742 (for sensed strength of force) is equal to/above the designated reference value, the processor 399 may control the driving circuit 325 so as to expand the front-surface display area to a designated size (for example, maximum size) for a video call. The processor 399 may provide a call application execution screen 760 for a video call through the expanded front-surface display area.

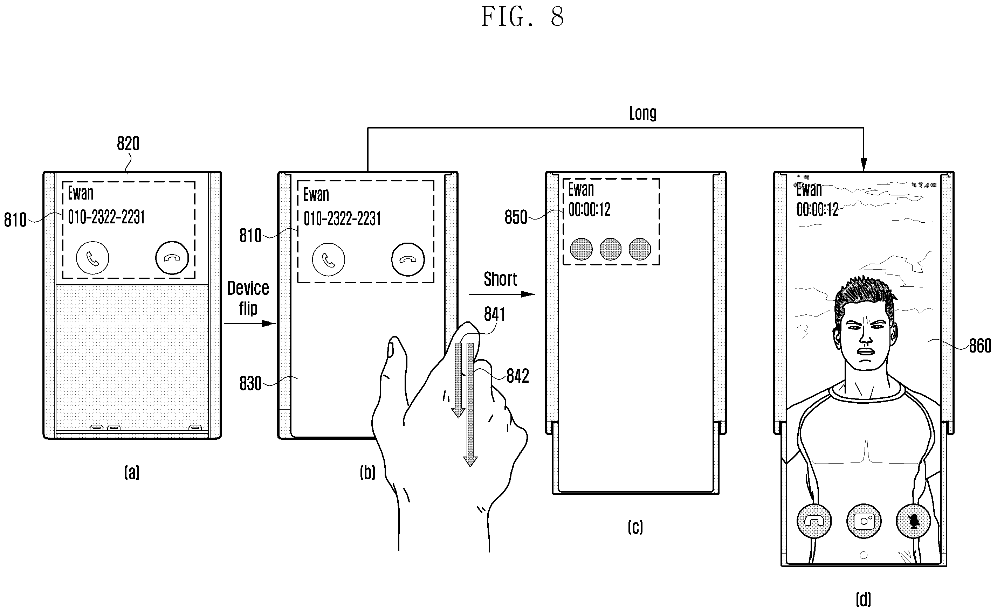

Referring to FIG. 8A, while the rear surface is positioned above the front surface, the processor 399 may receive a video call request message from an external electronic device through the wireless communication circuit, and may provide a call request notification 810 (for example, the call request notification 710 in FIG. 7A) through the rear-surface display area 820.

Referring to FIG. 8B, the processor 399 may provide, according to a user response intended to flip the portable electronic device, a visual effect so as to simulate a movement of the call request notification 810 from the rear-surface display area 820 to the front-surface display area 830, as if it were flowing water.

Referring to FIG. 8B and FIG. 8C, in response to the call request notification 810, the user may pull the second housing 220 physically halfway (manually side the same to an intermediate state). According to such a first user response 841, the processor 399 may recognize, based on data received from the sensor 320, that the state of the slidable housing has transitioned from the slide-in state to the intermediate state. According to such a state transition, the processor 399 may provide an execution screen 850 for a voice call through the expanded front-surface display area.

Referring to FIG. 8B and FIG. 8D, the user may pull the second housing 220 physically to the end (manually side the same to a slide-out state). According to such a second user response 842, the processor 399 may recognize, based on data received from the sensor 320, that the state of the slidable housing has transitioned from the slide-in state to the slide-out state. According to such a state transition, the processor 399 may provide an execution screen 860 for a voice call through the expanded front-surface display area.

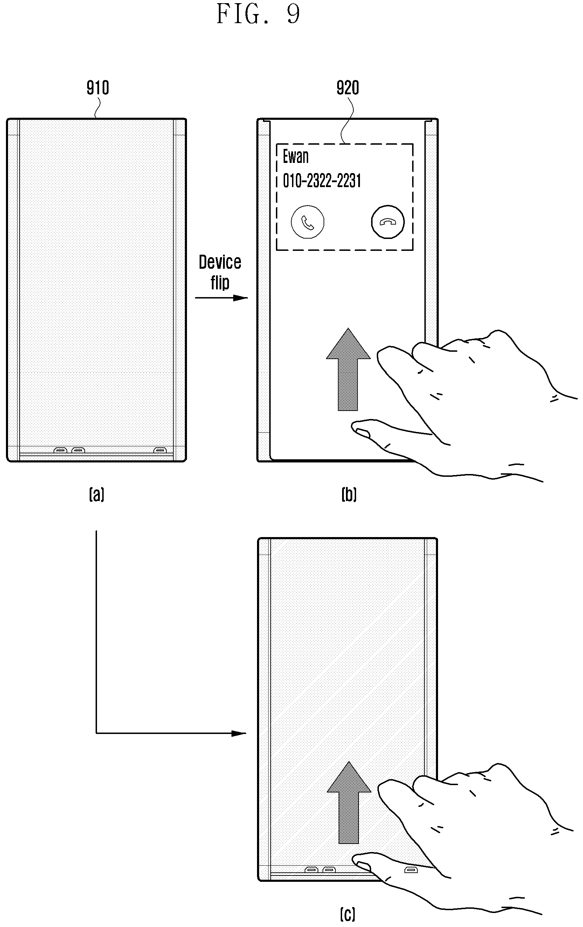

Referring to FIG. 9A, the processor 399 may sense, based on data received from the sensor 320, that the slidable housing is in a slide-out state, and that the rear surface is positioned above the front surface. While the rear surface is positioned above the front surface, the processor 399 may receive a call request message from an external electronic device through the wireless communication circuit, and may provide a first call request notification (for example, displaying text "incoming call") through a display area (for example, a part 230a of the display 230) positioned on the side surface 910.

Referring to FIG. 9B, according to a user response intended to flip the portable electronic device, the processor 399 may provide a second call request notification 920 (for example, the call request notification 710 in FIG. 7A) through the display. In response to the call request notification 920, the user may physically push the second housing 220 upwards (manually sliding). According to such a user response, the processor 399 may transmit a call rejection message to the external electronic device through the wireless communication circuit.

Referring to FIG. 9C, while the rear surface is positioned above the front surface, the user may physically push the second housing 220 upwards (manually sliding). According to such a user response, the processor 399 may transmit a call rejection message to the external electronic device through the wireless communication circuit.

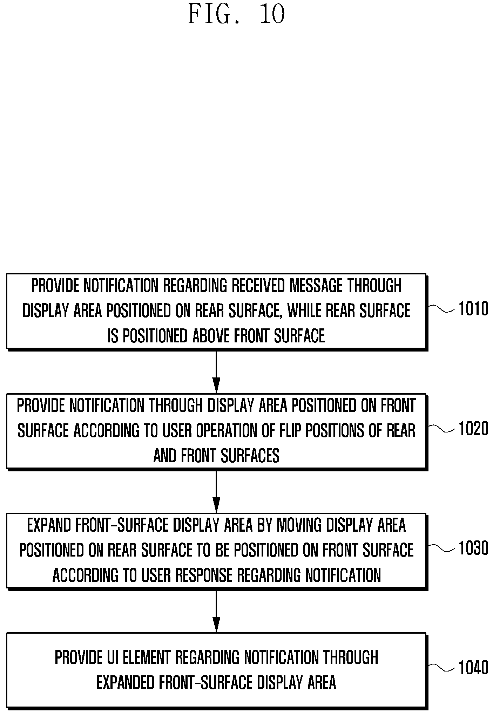

FIG. 10 illustrates operations performed by the processor 399 according to various embodiments.

In operation 1010, while the rear surface of the portable electronic device is positioned above the front surface, the processor 399 may provide a notification regarding a message received from an external electronic device through the wireless communication circuit, through a display area positioned on the rear surface.

In operation 1020, the processor 399 may identify, in response to a user operation intended to switch the positions of the rear and front surfaces, that the front surface of the portable electronic device is positioned above the rear surface, through the sensor 320, and may provide the notification through the display area positioned on the front surface in response to such a user operation. For example, a visual effect may be provided so as to simulate a movement of the notification from the rear surface to the front-surface display area via a side-surface display area, as if it were flowing water. Additionally, the processor 399 may provide a first button and a second button through the front-surface display area as a first UI element for receiving an additional user input regarding the notification moved to the front-surface display area. An operation corresponding to the additional user input may be preconfigured, and the first UI element may not be displayed in this case.

In operation 1030, the processor 399 may receive a user response (for example, a touch input regarding the first or second button) regarding the notification moved to the front-surface display area from the display 310, and may control the driving circuit 325 such that the display area positioned on the rear surface is moved to the front surface according to such a user response, thereby expanding the front-surface display area. For example, if the user response is a touch input regarding the first button, the processor 399 may control the driving circuit 325 so as to expand the front-surface display area to a first size designated to the first button. If the user response is a touch input regarding the second button, the processor 399 may control the driving circuit 325 so as to expand the front-surface display area to a second size (for example, maximum size) designated to the second button.

In operation 1040, the processor 399 may provide a second UI element related to a notification through the expanded front-surface display area. For example, the second UI element may include a keypad and a display window for displaying characters input to the portable electronic device through the same, when expanded to the first size. The second UI element may include an application execution screen related to a notification, when expanded to the second size.

In some embodiments, the processor 399 may automatically expand the front-surface display area together with a visual effect that simulate a movement of the notification from the rear surface to the front-surface display as if it were flowing water. For example, if the received message is a chatting message or an SNS message, the processor 399 may expand the front-surface display area to the second size (for example, maximum size) according to a user response intended to flip portable electronic device, and may provide an execution screen for the corresponding application and a keypad through the expanded front-surface display area.

In various embodiments, a portable electronic device (for example, portable electronic device 300 in FIG. 3) may include a first housing; a second housing capable of sliding with regard to the first housing; a driver (for example, roller, slider) configured such that a part of the second housing slides so as to be moved into the first housing or moved out of the first housing; a driving circuit (for example, driving circuit 325 in FIG. 3) configured to drive the driver; a flexible display (for example, touch-responsive display 310 in FIG. 3) configured such that, as the part of the second housing moved into the first housing is moved out of the first housing, an area positioned on a rear surface of the portable electronic device moves to a front surface of the portable electronic device via a side surface of the portable electronic device; a wireless communication circuit; a sensor (for example, sensor 320 in FIG. 3) configured to acquire data corresponding to a relative position between the front surface and the rear surface; a processor (for example, processor 399 in FIG. 3) operatively connected to the driving circuit, the wireless communication circuit, the sensor, and the flexible display; and a memory (for example, memory 330 in FIG. 3) connected to the processor. The memory may store instructions which, when executed, cause the processor to identify, based on data received from the sensor, that the rear surface is positioned above the front surface, while the rear surface is positioned above the front surface, provide a notification regarding a message received from an external electronic device through the wireless communication circuit through a display area of the flexible display positioned on the rear surface, identify, based on data received from the sensor, that the front surface is positioned above the rear surface, provide the notification through a display area of the flexible display positioned on the front surface according to a transition from a state in which the rear surface is positioned above the front surface to a state in which the front surface is positioned above the rear surface, control the driving circuit such that the display area of the flexible display positioned on the rear surface is moved to and disposed on the front surface according to selection information regarding the notification in a state in which the front surface is positioned above the rear surface, thereby expanding a front-surface display area of the portable electronic device, and provide a user interface (UI) element related to the notification according to the selection information through a display area expanded to the front surface.

The instructions may cause the processor to provide a visual effect simulating a movement of the notification from a rear-surface display area of the portable electronic device to a front-surface display area of the portable electronic device via a side-surface display area of the portable electronic device according to a transition from a state in which the rear surface is positioned above the front surface to a state in which the front surface is positioned above the rear surface.

The selection information regarding the notification may include a user input received through a touch panel included in the flexible display.

The instructions may cause the processor to provide a first button operatively connected to a first function and a second button operatively connected to a second function through the front-surface display area, together with the notification moved to the front-surface display area, and identify a user input corresponding to at least one of the first button and the second button as the selection information. The first function may be a function used to reply to the message, and the second function may be a function used to provide an execution screen for an application related to the message.

The instructions may cause the processor to control the driving circuit such that a part of the rear-surface display area is moved to the front surface according to a user input regarding the first button, thereby expanding the front-surface display area, and provide a keypad and a display window for displaying characters input to the portable electronic device through the keypad through the front-surface display area, and control the driving circuit such that the entire rear-surface display area is moved to the front surface according to a user input regarding the second button, thereby expanding the front-surface display area, and provide an execution screen for the application through the front-surface display area.

The received message may be a social networking service (SNS) message, and the instructions may cause the processor to include at least a part of content of the SNS message in the notification.

The instructions may cause the processor to provide a visual effect simulating a movement of the notification so as to be successively disposed in a rear-surface display area of the portable electronic device, in a side-surface display area of the portable electronic device, and in a front-surface display area of the portable electronic device, according to a transition from a state in which the rear surface is positioned above the front surface to a state in which the front surface is positioned above the rear surface.

The instructions may cause the processor to successively display the notification such that, at a timepoint of display on the side surface or at a timepoint of display on the front surface, the notification is turned upside down.

The received message may be a video call request message, and the instructions may cause the processor to include a call button and a cancel button in the notification.

The instructions may cause the processor to sense a distance of movement of a touch gesture starting from the call button through a touch sensor included in the flexible display, in case that the sensed distance of movement is equal to or above a reference value, control the driving circuit such that the entire rear-surface display area is moved to the front surface, thereby expanding the front-surface display area, and provide an execution screen for a video call of a call application through the front-surface display area, and in case that the sensed distance of movement is below the reference value, control the driving circuit such that a part of the rear-surface display area is moved to the front surface, thereby expanding the front-surface display area, and provide an execution screen for a voice call of the call application through the front-surface display.

The instructions may cause the processor to sense the strength of a force generated by a touch regarding the call button through a pressure sensor, in case that the sensed strength of the force is equal to or above a reference value, control the driving circuit such that the entire rear-surface display area is moved to the front surface, thereby expanding the front-surface display area, and provide an execution screen for a video call of a call application through the front-surface display area, and in case that the sensed strength of the force is below the reference value, control the driving circuit such that a part of the rear-surface display area is moved to the front surface, thereby expanding the front-surface display area, and provide an execution screen for a voice call of the call application through the front-surface display.

In various embodiments, a method for operating a portable electronic device may include the operations of: identifying, based on data received from a sensor of the portable electronic device, that a rear surface of the portable electronic device is positioned above a front surface of the portable electronic device; while the rear surface is positioned above the front surface, providing a notification regarding a message received from an external electronic device through a wireless communication circuit of the portable electronic device through a display area of a flexible display of the portable electronic device positioned on the rear surface; identifying, based on data received from the sensor, that the front surface is positioned above the rear surface; providing the notification through a display area of the flexible display positioned on the front surface according to a transition from a state in which the rear surface is positioned above the front surface to a state in which the front surface is positioned above the rear surface; controlling a driving circuit of the portable electronic device such that the display area of the flexible display positioned on the rear surface is moved to and disposed on the front surface according to selection information regarding the notification in a state in which the front surface is positioned above the rear surface, thereby expanding a front-surface display area of the portable electronic device; and providing a user interface (UI) element related to the notification according to the selection information through a display area expanded to the front surface of the portable electronic device.

The method may further include an operation of providing a visual effect simulating a movement of the notification from a rear-surface display area of the portable electronic device to a front-surface display area of the portable electronic device via a side-surface display area of the portable electronic device according to a transition from a state in which the rear surface is positioned above the front surface to a state in which the front surface is positioned above the rear surface.

The method may further include the operations of providing a first button operatively connected to a first function and a second button operatively connected to a second function through the front-surface display area, together with the notification moved to the front-surface display area; and identifying a user input corresponding to at least one of the first button and the second button as the selection information. The first function may be a function used to reply to the message, and the second function may be a function used to provide an execution screen for an application related to the message.

The method may further include the operations of controlling the driving circuit such that a part of the rear-surface display area is moved to the front surface according to a user input regarding the first button, thereby expanding the front-surface display area, and provide a keypad and a display window for displaying characters input to the portable electronic device through the keypad through the front-surface display area; and controlling the driving circuit such that the entire rear-surface display area is moved to the front surface according to a user input regarding the second button, thereby expanding the front-surface display area, and provide an execution screen for the application through the front-surface display area.

The method may further include an operation of providing a visual effect simulating a movement of the notification so as to be successively disposed in a rear-surface display area of the portable electronic device, in a side-surface display area of the portable electronic device, and in a front-surface display area of the portable electronic device, according to a transition from a state in which the rear surface is positioned above the front surface to a state in which the front surface is positioned above the rear surface.

The method may further include an operation of successively displaying the notification such that, at a timepoint of display on the side surface or at a timepoint of display on the front surface, the notification is turned upside down.

The method may further include an operation in which, when the received message is an SNS message, at least a part of the content of the SNS message is included in the notification and, when the received message is a video call request message, a call button and a cancel button are included in the notification.

In various embodiments (for example, embodiment in FIG. 9), a portable electronic device may include a slidable housing including a first housing and a second housing; a driver configured such that an inwardly movable portion of the second housing is moved into the first housing or moved out of the first housing; a flexible display disposed on a front surface of the electronic device in a slide-out state in which the inwardly movable portion is moved out of the first housing, a part of the flexible display being moved to a rear surface of the portable electronic device via a side surface of the portable electronic device and disposed thereon according to a state transition to a slide-in state in which the inwardly movable portion is moved into the first housing; a wireless communication circuit; a sensor configured to generate data corresponding to a relative position between the front surface and the rear surface and output the data; a processor operatively connected to the wireless communication circuit, the sensor, and the display; and a memory connected to the processor. The memory may store instructions which, when executed, cause the processor to provide a first call request notification through a display area adjacent to the side surface in case that a call request message is received from an external electronic device through the wireless communication circuit while the slidable housing is in the slide-out state, and while the rear surface is positioned above the front surface, and transmit a call rejection message to the external electronic device through the wireless communication circuit in case that an inward movement of the inwardly movable portion into the first housing is sensed through the sensor in a state in which the rear surface is positioned above the front surface.

The instructions may cause the processor to sense a user response intended to flip the portable electronic device while the slidable housing maintains the slide-out state, through data received from the sensor, provide a second call request notification through a display area positioned on the front surface according to the user response, and transmit a call rejection message through the wireless communication circuit to the external electronic device in case that an inward movement of the inwardly movable portion into the first housing is sensed through the sensor in a state in which the front surface is positioned above the rear surface.

Embodiments of the disclosure disclosed in the specification and the drawings are only specific examples presented to easily describe the technical content according to embodiments of the disclosure and to help understanding of embodiments of the disclosure, and are not intended to limit the scope of embodiments of the disclosure further than the scope defined by the appended claims. Therefore, the scope of various embodiments of the disclosure is to be interpreted as including all changed or modified forms derived from the technical idea of various embodiments of the disclosure, in addition to the embodiments disclosed herein, as defined by the scope of the appended claims.

## Claims

1. A portable electronic device (101, 200, 300) comprising:
a first housing (210);
a second housing (220) capable of sliding with regard to the first housing;
a driver configured such that a part of the second housing slides so as to be moved into the first housing or moved out of the first housing;
a driving circuit (325) including a motor and configured to rotate or move the driver by the motor;
a flexible display (230) configured such that, as the part of the second housing moved into the first housing is moved out of the first housing, an area positioned on a rear surface of the portable electronic device moves to a front surface of the portable electronic device via a side surface of the portable electronic device;
a wireless communication circuit;
a sensor (320) comprising at least one of a gyro sensor and an acceleration sensor, wherein the sensor (320) is configured to acquire data corresponding to a relative position between the front surface and the rear surface;
a processor (120, 399) operatively connected to the driving circuit (325), the wireless communication circuit, the sensor, and the flexible display; and
a memory (130, 330) connected to the processor (120, 399),
wherein the memory (130, 330) stores instructions which, when executed, cause the processor (120, 399) to:
identify, based on data received from the sensor, that the rear surface is positioned above the front surface,
while the rear surface is positioned above the front surface, provide a notification regarding a message received from an external electronic device through the wireless communication circuit through a display area of the flexible display positioned on the rear surface,
identify, based on data received from the sensor, that the front surface is positioned above the rear surface,
provide the notification through a display area of the flexible display positioned on the front surface according to a transition from a state in which the rear surface is positioned above the front surface to a state in which the front surface is positioned above the rear surface,
control the driving circuit to rotate or move the driver for sliding the second housing so as to be moved out of the first housing such that the display area of the flexible display positioned on the rear surface is moved to and disposed on the front surface according to selection information regarding the notification in a state in which the front surface is positioned above the rear surface, thereby expanding a front-surface display area of the portable electronic device, and
provide a user interface, UI, element related to the notification according to the selection information through a display area expanded to the front surface.

2. The portable electronic device of claim 1, wherein the instructions cause the processor to provide a visual effect simulating a movement of the notification from a rear-surface display area of the portable electronic device to a front-surface display area of the portable electronic device via a side-surface display area of the portable electronic device according to a transition from a state in which the rear surface is positioned above the front surface to a state in which the front surface is positioned above the rear surface.

3. The portable electronic device of claims 1 or 2, wherein the selection information regarding the notification comprises a user input received through a touch panel included in the flexible display.

4. The portable electronic device of claim 3, wherein the instructions cause the processor to:
provide a first button operatively connected to a first function and a second button operatively connected to a second function through the front-surface display area, together with the notification moved to the front-surface display area, and identify a user input corresponding to at least one of the first button and the second button as the selection information, and
wherein the first function is a function used to reply to the message, and
the second function is a function used to provide an execution screen for an application related to the message.

5. The portable electronic device of claim 4, wherein the instructions cause the processor to:
control the driving circuit such that a part of the rear-surface display area is moved to the front surface according to a user input regarding the first button, thereby expanding the front-surface display area, and provide a keypad and a display window for displaying characters input to the portable electronic device through the keypad through the front-surface display area, and
control the driving circuit such that the entire rear-surface display area is moved to the front surface according to a user input regarding the second button, thereby expanding the front-surface display area, and provide an execution screen for the application through the front-surface display area.

6. The portable electronic device of any of claims 1 to 5, wherein the received message is a social networking service, SNS, message, and the instructions cause the processor to include at least a part of content of the SNS message in the notification.

7. The portable electronic device of claim 1, wherein the instructions cause the processor to provide a visual effect simulating a movement of the notification so as to be successively disposed in a rear-surface display area of the portable electronic device, in a side-surface display area of the portable electronic device, and in a front-surface display area of the portable electronic device, according to a transition from a state in which the rear surface is positioned above the front surface to a state in which the front surface is positioned above the rear surface.

8. The portable electronic device of claim 7, wherein the instructions cause the processor to successively display the notification such that, at a timepoint of display on the side surface or at a timepoint of display on the front surface, the notification is turned upside down.

9. The portable electronic device of any of claims 3 to 5, wherein the received message is a video call request message, and the instructions cause the processor to include a call button and a cancel button in the notification.

10. The portable electronic device of claim 9, wherein the instructions cause the processor to:
sense a distance of movement of a touch gesture starting from the call button through a touch sensor included in the flexible display,
in case that the sensed distance of movement is equal to or above a reference value, control the driving circuit such that the entire rear-surface display area is moved to the front surface, thereby expanding the front-surface display area, and provide an execution screen for a video call of a call application through the front-surface display area, and
in case that the sensed distance of movement is below the reference value, control the driving circuit such that a part of the rear-surface display area is moved to the front surface, thereby expanding the front-surface display area, and provide an execution screen for a voice call of the call application through the front-surface display.

11. The portable electronic device of claim 9, wherein the instructions cause the processor to:
sense the strength of a force generated by a touch regarding the call button through a pressure sensor,
in case that the sensed strength of the force is equal to or above a reference value, control the driving circuit such that the entire rear-surface display area is moved to the front surface, thereby expanding the front-surface display area, and provide an execution screen for a video call of a call application through the front-surface display area, and
in case that the sensed strength of the force is below the reference value, control the driving circuit such that a part of the rear-surface display area is moved to the front surface, thereby expanding the front-surface display area, and provide an execution screen for a voice call of the call application through the front-surface display.

12. A method for operating a portable electronic device, the method comprising:
identifying, based on data received from a sensor of the portable electronic device, that a rear surface of the portable electronic device is positioned above a front surface of the portable electronic device, the sensor comprising at least one of a gyro sensor and an acceleration sensor;
while the rear surface is positioned above the front surface, providing a notification regarding a message received from an external electronic device through a wireless communication circuit of the portable electronic device through a display area of a flexible display of the portable electronic device positioned on the rear surface;
identifying, based on data received from the sensor, that the front surface is positioned above the rear surface;
providing the notification through a display area of the flexible display positioned on the front surface according to a transition from a state in which the rear surface is positioned above the front surface to a state in which the front surface is positioned above the rear surface;
controlling a driving circuit of the portable electronic device such that the display area of the flexible display positioned on the rear surface is moved to and disposed on the front surface according to selection information regarding the notification in a state in which the front surface is positioned above the rear surface, thereby expanding a front-surface display area of the portable electronic device; and
providing a user interface, UI, element related to the notification according to the selection information through a display area expanded to the front surface of the portable electronic device.

13. The method of claim 12, further comprising providing a visual effect simulating a movement of the notification from a rear-surface display area of the portable electronic device to a front-surface display area of the portable electronic device via a side-surface display area of the portable electronic device according to a transition from a state in which the rear surface is positioned above the front surface to a state in which the front surface is positioned above the rear surface.

14. A portable electronic device (101, 200, 300) comprising:
a slidable housing comprising a first housing (210) and a second housing (220);
a driver configured such that an inwardly movable portion of the second housing is moved into the first housing or moved out of the first housing;
a driving circuit (325) including a motor and configured to rotate or move the driver by the motor;
a flexible display (230) disposed on a front surface of the electronic device in a slide-out state in which the inwardly movable portion is moved out of the first housing, a part of the flexible display being moved to a rear surface of the portable electronic device via a side surface of the portable electronic device and disposed thereon according to a state transition to a slide-in state in which the inwardly movable portion is moved into the first housing;
a wireless communication circuit (192);
a sensor (320) comprising at least one of a gyro sensor and an acceleration sensor, wherein the sensor (320) is configured to generate data corresponding to a relative position between the front surface and the rear surface and output the data;
a processor (120, 399) operatively connected to the wireless communication circuit, the sensor, and the display; and
a memory (130, 330) connected to the processor,
wherein the memory stores instructions which, when executed, cause the processor to:
provide a first call request notification through a display area positioned on the side surface in case that a call request message is received from an external electronic device through the wireless communication circuit while the slidable housing is in the slide-out state, and while the rear surface is positioned above the front surface, and
transmit a first call rejection message to the external electronic device through the wireless communication circuit in case that an inward movement of the inwardly movable portion into the first housing is sensed through the sensor in a state in which the rear surface is positioned above the front surface.

15. The portable electronic device of claim 14, wherein the instructions cause the processor to:
sense a user response intended to flip the portable electronic device while the slidable housing maintains the slide-out state, through data received from the sensor,
provide a second call request notification through a display area positioned on the front surface according to the user response, and
transmit a second call rejection message through the wireless communication circuit to the external electronic device in case that an inward movement of the inwardly movable portion into the first housing is sensed through the sensor in a state in which the front surface is positioned above the rear surface.

## Patentansprüche

1. Tragbares elektronisches Gerät (101, 200, 300), umfassend:
ein erstes Gehäuse (210);
ein zweites Gehäuse (220), das in Bezug auf das erste Gehäuse verschiebbar ist;
einen Antrieb, der so konfiguriert ist, dass ein Teil des zweiten Gehäuses verschoben wird, um in das erste Gehäuse hinein oder aus dem ersten Gehäuse heraus bewegt zu werden;
eine Antriebsschaltung (325), die einen Motor umfasst und so konfiguriert ist, dass sie den Antrieb durch den Motor dreht oder bewegt;
eine flexible Anzeige (230), die so konfiguriert ist, dass, wenn der Teil des zweiten Gehäuses, der in das erste Gehäuse bewegt wurde, aus dem ersten Gehäuse heraus bewegt wird, ein Bereich, der sich an einer Rückfläche des tragbaren elektronischen Geräts befindet, über eine Seitenfläche des tragbaren elektronischen Geräts zu einer Vorderfläche des tragbaren elektronischen Geräts bewegt wird;
eine drahtlose Kommunikationsschaltung;
einen Sensor (320), der mindestens einen von einem Gyrosensor und einem Beschleunigungssensor umfasst, wobei der Sensor (320) so konfiguriert ist, dass er Daten erfasst, die einer relativen Position zwischen der Vorderfläche und der Rückfläche entsprechen;
einen Prozessor (120, 399), der funktionsfähig mit der Antriebsschaltung (325), der drahtlosen Kommunikationsschaltung, dem Sensor und der flexiblen Anzeige verbunden ist; und
einen Speicher (130, 330), der mit dem Prozessor (120, 399) verbunden ist,
wobei der Speicher (130, 330) Anweisungen speichert, die bei ihrer Ausführung den Prozessor (120, 399) dazu veranlassen:
basierend auf von dem Sensor empfangenen Daten zu identifizieren, dass die Rückfläche über der Vorderfläche positioniert ist,
während die Rückfläche über der Vorderfläche positioniert ist, über einen an der Rückfläche positionierten Anzeigebereich der flexiblen Anzeige eine Benachrichtigung über eine von einem externen elektronischen Gerät über die drahtlose Kommunikationsschaltung empfangene Nachricht bereitzustellen,
basierend auf von dem Sensor empfangenen Daten zu identifizieren, dass die Vorderfläche über der Rückfläche positioniert ist,
die Benachrichtigung über einen an der Vorderfläche positionierten Anzeigebereich der flexiblen Anzeige entsprechend einem Übergang von einem Zustand, in dem die Rückfläche über der Vorderfläche positioniert ist, zu einem Zustand, in dem die Vorderfläche über der Rückfläche positioniert ist, bereitzustellen,
die Antriebsschaltung zu steuern, um den Antrieb zum Verschieben des zweiten Gehäuses so zu drehen oder zu bewegen, dass es aus dem ersten Gehäuse heraus bewegt wird, so dass der an der Rückfläche positionierte Anzeigebereich der flexiblen Anzeige entsprechend einer Auswahlinformation bezüglich der Benachrichtigung in einem Zustand, in dem die Vorderfläche über der Rückfläche positioniert ist, zur Vorderfläche bewegt und an der Vorderfläche angeordnet wird, wodurch ein Vorderfläche-Anzeigebereich des tragbaren elektronischen Geräts erweitert wird, und
ein Benutzerschnittstellenelement (UI-Element) in Bezug auf die Benachrichtigung entsprechend der Auswahlinformation über einen auf die Vorderfläche erweiterten Anzeigebereich bereitzustellen.

2. Tragbares elektronisches Gerät nach Anspruch 1, wobei die Anweisungen den Prozessor veranlassen, einen visuellen Effekt bereitzustellen, der eine Bewegung der Benachrichtigung von einem Rückfläche-Anzeigebereich des tragbaren elektronischen Geräts zu einem Vorderfläche-Anzeigebereich des tragbaren elektronischen Geräts über einen Seitenfläche-Anzeigebereich des tragbaren elektronischen Geräts entsprechend einem Übergang von einem Zustand, in dem die Rückfläche über der Vorderfläche positioniert ist, zu einem Zustand, in dem die Vorderfläche über der Rückfläche positioniert ist, simuliert.

3. Tragbares elektronisches Gerät nach Anspruch 1 oder 2, wobei die Auswahlinformation bezüglich der Benachrichtigung eine Benutzereingabe umfasst, die über ein in der flexiblen Anzeige enthaltenes Touchpanel empfangen wird.

4. Tragbares elektronisches Gerät nach Anspruch 3, wobei die Anweisungen den Prozessor dazu veranlassen:
eine erste Taste, die funktionsfähig mit einer ersten Funktion verbunden ist, und eine zweite Taste, die funktionsfähig mit einer zweiten Funktion verbunden ist, über den Vorderfläche-Anzeigebereich zusammen mit der in den Vorderfläche-Anzeigebereich bewegten Benachrichtigung bereitzustellen und eine Benutzereingabe, die mindestens einer von der ersten Taste und der zweiten Taste entspricht, als Auswahlinformation zu identifizieren, und
wobei die erste Funktion eine Funktion ist, die zum Beantworten der Nachricht verwendet wird, und
die zweite Funktion eine Funktion ist, die zum Bereitstellen eines Ausführungsbildschirms für eine mit der Nachricht verbundene Anwendung verwendet wird.

5. Tragbares elektronisches Gerät nach Anspruch 4, wobei die Anweisungen den Prozessor dazu veranlassen:
die Antriebsschaltung so zu steuern, dass ein Teil des Rückfläche-Anzeigebereichs entsprechend einer Benutzereingabe bezüglich der ersten Taste auf die Vorderfläche bewegt wird, wodurch der Vorderfläche-Anzeigebereich erweitert wird, und eine Tastatur und ein Anzeigefenster zum Anzeigen von Zeichen über den Vorderfläche-Anzeigebereich bereitzustellen, wobei die Zeichen über die Tastatur in das tragbare elektronische Gerät eingegeben werden, und
die Antriebsschaltung so zu steuern, dass der gesamte Rückfläche-Anzeigebereich entsprechend einer Benutzereingabe bezüglich der zweiten Taste auf die Vorderfläche bewegt wird, wodurch der Vorderfläche-Anzeigebereich erweitert wird, und einen Ausführungsbildschirm für die Anwendung über den Vorderfläche-Anzeigebereich bereitzustellen.

6. Tragbares elektronisches Gerät nach einem der Ansprüche 1 bis 5, wobei die empfangene Nachricht eine Nachricht eines Diensts für sozialen Netzwerk (SNS) ist und die Anweisungen den Prozessor veranlassen, mindestens einen Teil des Inhalts der SNS-Nachricht in die Benachrichtigung aufzunehmen.

7. Tragbares elektronisches Gerät nach Anspruch 1, wobei die Anweisungen den Prozessor veranlassen, einen visuellen Effekt bereitzustellen, der eine Bewegung der Benachrichtigung simuliert, so dass diese nacheinander in einem Rückfläche-Anzeigebereich des tragbaren elektronischen Geräts, in einem Seitenfläche-Anzeigebereich des tragbaren elektronischen Geräts und in einem Vorderfläche-Anzeigebereich des tragbaren elektronischen Geräts angeordnet wird, entsprechend einem Übergang von einem Zustand, in dem die Rückfläche über der Vorderfläche positioniert ist, zu einem Zustand, in dem die Vorderfläche über der Rückfläche positioniert ist.

8. Tragbares elektronisches Gerät nach Anspruch 7, wobei die Anweisungen den Prozessor veranlassen, die Benachrichtigung nacheinander so anzuzeigen, dass die Benachrichtigung zu einem Zeitpunkt der Anzeige an der Seitenfläche oder zu einem Zeitpunkt der Anzeige an der Vorderfläche umgekehrt wird.

9. Tragbares elektronisches Gerät nach einem der Ansprüche 3 bis 5, wobei die empfangene Nachricht eine Videoanruf-Anforderungsnachricht ist und die Anweisungen den Prozessor veranlassen, eine Anruftaste und eine Abbrechen-Taste in die Benachrichtigung aufzunehmen.

10. Tragbares elektronisches Gerät nach Anspruch 9, wobei die Anweisungen den Prozessor dazu veranlassen:
eine Bewegungsstrecke einer von der Anruftaste ausgehenden Berührungsgeste über einen Berührungssensor zu erfassen, der in der flexiblen Anzeige enthalten ist,
falls die erfasste Bewegungsstrecke gleich oder größer als ein Referenzwert ist, die Antriebsschaltung so zu steuern, dass der gesamte Rückfläche-Anzeigebereich zur Vorderfläche bewegt wird, wodurch der Vorderfläche-Anzeigebereich erweitert wird, und einen Ausführungsbildschirm für einen Videoanruf einer Anrufanwendung über den Vorderfläche-Anzeigebereich bereitzustellen, und
falls die erfasste Bewegungsstrecke unter dem Referenzwert liegt, die Antriebsschaltung so zu steuern, dass ein Teil des Rückfläche-Anzeigebereichs zur Vorderfläche bewegt wird, wodurch der Vorderfläche-Anzeigebereich erweitert wird, und einen Ausführungsbildschirm für einen Sprachanruf der Anrufanwendung über die Vorderfläche-Anzeige bereitzustellen.

11. Tragbares elektronisches Gerät nach Anspruch 9, wobei die Anweisungen den Prozessor dazu veranlassen:
die Stärke einer durch eine Berührung der Anruftaste erzeugten Kraft über einen Drucksensor zu erfassen,
falls die erfasste Kraftstärke gleich oder größer als ein Referenzwert ist, die Antriebsschaltung so zu steuern, dass der gesamte Rückfläche-Anzeigebereich zur Vorderfläche bewegt wird, wodurch der Vorderfläche-Anzeigebereich erweitert wird, und einen Ausführungsbildschirm für einen Videoanruf einer Anrufanwendung über den Vorderfläche-Anzeigebereich bereitzustellen, und
falls die erfasste Kraftstärke unter dem Referenzwert liegt, die Antriebsschaltung so zu steuern, dass ein Teil des Rückfläche-Anzeigebereichs zur Vorderfläche bewegt wird, wodurch der Vorderfläche-Anzeigebereich erweitert wird, und einen Ausführungsbildschirm für einen Sprachanruf der Anrufanwendung über die Vorderfläche-Anzeige bereitzustellen.

12. Verfahren zum Betreiben eines tragbaren elektronischen Geräts, wobei das Verfahren Folgendes umfasst:
Identifizieren, basierend auf von einem Sensor des tragbaren elektronischen Geräts empfangen Daten, dass eine Rückfläche des tragbaren elektronischen Geräts über einer Vorderfläche des tragbaren elektronischen Geräts positioniert ist, wobei der Sensor mindestens einen von einem Gyrosensor und einem Beschleunigungssensor umfasst;
während die Rückfläche über der Vorderfläche positioniert ist, Bereitstellen einer Benachrichtigung über eine von einem externen elektronischen Gerät über eine drahtlose Kommunikationsschaltung des tragbaren elektronischen Geräts empfangene Nachricht über einen an der Rückfläche positionierten Anzeigebereich einer flexiblen Anzeige des tragbaren elektronischen Geräts;
Identifizieren, basierend auf von dem Sensor empfangenen Daten, dass die Vorderfläche über der Rückfläche positioniert ist;
Bereitstellen der Benachrichtigung über einen an der Vorderfläche positionierten Anzeigebereich der flexiblen Anzeige entsprechend einem Übergang von einem Zustand, in dem die Rückfläche über der Vorderfläche positioniert ist, zu einem Zustand, in dem die Vorderfläche über der Rückfläche positioniert ist;
Steuern einer Antriebsschaltung des tragbaren elektronischen Geräts, so dass der an der Rückfläche positionierte Anzeigebereich der flexiblen Anzeige entsprechend einer Auswahlinformation bezüglich der Benachrichtigung in einem Zustand, in dem die Vorderfläche über der Rückfläche positioniert ist, zur Vorderfläche bewegt und an der Vorderfläche angeordnet wird, wodurch ein Vorderfläche-Anzeigebereich des tragbaren elektronischen Geräts erweitert wird; und
Bereitstellen eines Benutzerschnittstellenelements (UI-Elements) in Bezug auf die Benachrichtigung entsprechend der Auswahlinformation über einen auf die Vorderfläche des tragbaren elektronischen Geräts erweiterten Anzeigebereich.

13. Verfahren nach Anspruch 12, das ferner das Bereitstellen eines visuellen Effekts umfasst, der eine Bewegung der Benachrichtigung von einem Rückfläche-Anzeigebereich des tragbaren elektronischen Geräts zu einem Vorderfläche-Anzeigebereich des tragbaren elektronischen Geräts über einen Seitenfläche-Anzeigebereich des tragbaren elektronischen Geräts entsprechend einem Übergang von einem Zustand, in dem die Rückfläche über der Vorderfläche positioniert ist, zu einem Zustand, in dem die Vorderfläche über der Rückfläche positioniert ist, simuliert.

14. Tragbares elektronisches Gerät (101, 200, 300), umfassend:
ein verschiebbares Gehäuse, das ein erstes Gehäuse (210) und ein zweites Gehäuse (220) umfasst;
einen Antrieb, der so konfiguriert ist, dass ein nach innen bewegbarer Teil des zweiten Gehäuses in das erste Gehäuse hinein oder aus dem ersten Gehäuse heraus bewegt wird;
eine Antriebsschaltung (325), die einen Motor umfasst und so konfiguriert ist, dass sie den Antrieb durch den Motor dreht oder bewegt;
eine flexible Anzeige (230), die an einer Vorderfläche des elektronischen Geräts in einem herausgeschobenen Zustand angeordnet ist, in dem der nach innen bewegbare Teil aus dem ersten Gehäuse heraus bewegt ist, wobei ein Teil der flexiblen Anzeige über eine Seitenfläche des tragbaren elektronischen Geräts zu einer Rückfläche des tragbaren elektronischen Geräts bewegt und dort entsprechend einem Zustandsübergang zu einem eingeschobenen Zustand angeordnet wird, in dem der nach innen bewegbare Teil in das erste Gehäuse hinein bewegt ist;
eine drahtlose Kommunikationsschaltung (192);
einen Sensor (320), der mindestens einen von einem Gyrosensor und einem Beschleunigungssensor umfasst, wobei der Sensor (320) so konfiguriert ist, dass er Daten erzeugt, die einer relativen Position zwischen der Vorderfläche und der Rückfläche entsprechen, und die Daten ausgibt;
einen Prozessor (120, 399), der funktionsfähig mit der drahtlosen Kommunikationsschaltung, dem Sensor und der Anzeige verbunden ist; und
einen Speicher (130, 330), der mit dem Prozessor verbunden ist,
wobei der Speicher Anweisungen speichert, die bei ihrer Ausführung den Prozessor dazu veranlassen:
eine erste Anrufanforderungsbenachrichtigung über einen Anzeigebereich bereitzustellen, der an der Seitenfläche positioniert ist, falls eine Anrufanforderungsnachricht von einem externen elektronischen Gerät über die drahtlose Kommunikationsschaltung empfangen wird, während sich das verschiebbare Gehäuse im herausgeschobenen Zustand befindet und die Rückfläche über der Vorderfläche positioniert ist, und
eine erste Anrufablehnungsnachricht über die drahtlose Kommunikationsschaltung an das externe elektronische Gerät zu senden, falls eine Einwärtsbewegung des nach innen bewegbaren Teils in das erste Gehäuse durch den Sensor in einem Zustand erfasst wird, in dem die Rückfläche über der Vorderfläche positioniert ist.

15. Tragbares elektronisches Gerät nach Anspruch 14, wobei die Anweisungen den Prozessor dazu veranlassen:
eine Benutzerreaktion anhand von vom Sensor empfangenen Daten zu erfassen, wobei die Benutzerreaktion darauf abzielt, das tragbare elektronische Gerät umzudrehen, während das verschiebbare Gehäuse den herausgeschobenen Zustand beibehält,
eine zweite Anrufanforderungsbenachrichtigung über einen an der Vorderfläche positionierten Anzeigebereich entsprechend der Benutzerreaktion bereitzustellen, und
eine zweite Anrufablehnungsnachricht über die drahtlose Kommunikationsschaltung an das externe elektronische Gerät zu senden, falls eine Einwärtsbewegung des nach innen bewegbaren Teils in das erste Gehäuse durch den Sensor in einem Zustand erfasst wird, in dem die Vorderfläche über der Rückfläche positioniert ist.

## Revendications

1. Équipement électronique portable (101, 200, 300), comprenant :
un premier boîtier (210) ;
un deuxième boîtier (220) capable de coulisser par rapport au premier boîtier ;
un élément d'entraînement configuré pour qu'une partie du deuxième boîtier coulisse afin d'être déplacée jusqu'à l'intérieur du premier boîtier ou déplacée hors du premier boîtier ;
un circuit d'entraînement (325) comprenant un moteur et configuré pour faire tourner ou déplacer l'élément d'entraînement à l'aide du moteur ;
un afficheur flexible (230) configuré pour que, au fur et à mesure que la partie du deuxième boîtier déplacée jusqu'à l'intérieur du premier boîtier est déplacée hors du premier boîtier, une zone positionnée sur une surface arrière de l'équipement électronique portable se déplace vers une surface avant de l'équipement électronique portable par une surface latérale de l'équipement électronique portable ;
un circuit de communication sans fil ;
un capteur (320) comprenant au moins l'un d'un capteur gyroscopique et d'un capteur d'accélération, le capteur (320) étant configuré pour acquérir des données correspondant à une position relative entre la surface avant et la surface arrière ;
un processeur (120, 399) connecté de manière opérationnelle au circuit d'entraînement (325), au circuit de communication sans fil, au capteur et à l'afficheur flexible ; et
une mémoire (130, 330) connectée au processeur (120, 399),
dans lequel la mémoire (130, 330) stocke des instructions qui, lorsqu'elles sont exécutées, amènent le processeur (120, 399) à :
identifier, sur la base de données reçues depuis le capteur, que la surface arrière est positionnée au-dessus de la surface avant,
lorsque la surface arrière est positionnée au-dessus de la surface avant, fournir une notification concernant un message reçu depuis un équipement électronique externe par l'intermédiaire du circuit de communication sans fil par une zone d'affichage de l'afficheur flexible positionnée sur la surface arrière,
identifier, sur la base de données reçues depuis le capteur, que la surface avant est positionnée au-dessus de la surface arrière,
fournir la notification par une zone d'affichage de l'afficheur flexible positionnée sur la surface avant en fonction d'une transition d'un état dans lequel la surface arrière est positionnée au-dessus de la surface avant à un état dans lequel la surface avant est positionnée au-dessus de la surface arrière,
commander le circuit d'entraînement à faire tourner ou déplacer l'élément d'entraînement afin de faire coulisser le deuxième boîtier pour être retiré du premier boîtier de sorte que la zone d'affichage de l'afficheur flexible positionnée sur la surface arrière soit déplacée et disposée sur la surface avant en fonction des informations de sélection concernant la notification dans un état dans lequel la surface avant est positionnée au-dessus de la surface arrière, élargissant ainsi une zone d'affichage de surface avant de l'équipement électronique portable, et
fournir un élément d'interface utilisateur, UI, lié à la notification en fonction des informations de sélection par une zone d'affichage élargie vers la surface avant.

2. Équipement électronique portable selon la revendication 1, dans lequel les instructions amènent le processeur à fournir un effet visuel simulant un déplacement de la notification d'une zone d'affichage de surface arrière de l'équipement électronique portable vers une zone d'affichage de surface avant de l'équipement électronique portable par une zone d'affichage de surface latérale de l'équipement électronique portable en fonction d'une transition d'un état dans lequel la surface arrière est positionnée au-dessus de la surface avant à un état dans lequel la surface avant est positionnée au-dessus de la surface arrière.

3. Équipement électronique portable selon les revendications 1 ou 2, dans lequel les informations de sélection concernant la notification comprennent une entrée utilisateur reçue par l'intermédiaire d'un panneau tactile inclus dans l'afficheur flexible.

4. Équipement électronique portable selon la revendication 3, dans lequel les instructions amènent le processeur à :
fournir un premier bouton connecté de manière opérationnelle à une première fonction et un deuxième bouton connecté de manière opérationnelle à une deuxième fonction par la zone d'affichage de la surface avant, avec la notification déplacée vers la zone d'affichage de surface avant, et identifier une entrée utilisateur correspondant à au moins l'un du premier bouton ou du deuxième bouton comme informations de sélection, et
dans lequel la première fonction est une fonction utilisée pour répondre au message, et
la deuxième fonction est une fonction utilisée pour fournir un écran d'exécution pour une application liée au message.

5. Équipement électronique portable selon la revendication 4, dans lequel les instructions amènent le processeur à :
commander le circuit d'entraînement de sorte qu'une partie de la zone d'affichage de surface arrière soit déplacée vers la surface avant en fonction d'une entrée utilisateur concernant le premier bouton, élargissant ainsi la zone d'affichage de surface avant, et fournir un clavier et une fenêtre d'affichage pour afficher des caractères saisis dans l'équipement électronique portable à l'aide du clavier par la zone d'affichage de surface avant, et
commander le circuit d'entraînement de sorte que l'ensemble de la zone d'affichage de surface arrière soit déplacé vers la surface avant en fonction d'une entrée utilisateur concernant le deuxième bouton, élargissant ainsi la zone d'affichage de surface avant, et fournir un écran d'exécution pour l'application par la zone d'affichage de surface avant.

6. Équipement électronique portable selon l'une quelconque des revendications 1 à 5, dans lequel le message reçu est un message de service de réseau social, SNS, et les instructions amènent le processeur à inclure au moins une partie d'un contenu du message SNS dans la notification.

7. Équipement électronique portable selon la revendication 1, dans lequel les instructions amènent le processeur à fournir un effet visuel simulant un déplacement de la notification afin d'être disposée successivement dans une zone d'affichage de surface arrière de l'équipement électronique portable, dans une zone d'affichage de surface latérale de l'équipement électronique portable et dans une zone d'affichage de surface avant de l'équipement électronique portable, en fonction d'une transition d'un état dans lequel la surface arrière est positionnée au-dessus de la surface avant à un état dans lequel la surface avant est positionnée au-dessus de la surface arrière.

8. Équipement électronique portable selon la revendication 7, dans lequel les instructions amènent le processeur à afficher successivement la notification de sorte qu'à un moment d'affichage sur la surface latérale ou à un moment d'affichage sur la surface avant, la notification soit retournée à l'envers.

9. Équipement électronique portable selon l'une quelconque des revendications 3 à 5, dans lequel le message reçu est un message de demande d'appel vidéo, et les instructions amènent le processeur à inclure un bouton d'appel et un bouton d'annulation dans la notification.

10. Équipement électronique portable selon la revendication 9, dans lequel les instructions amènent le processeur à :
détecter une distance de déplacement d'un geste tactile du bouton d'appel à l'aide d'un capteur tactile inclus dans l'afficheur flexible,
dans un cas où la distance de déplacement détectée est égale ou supérieure à une valeur de référence, commander le circuit d'entraînement de sorte que toute la zone d'affichage de surface arrière soit déplacée vers la surface avant, élargissant ainsi la zone d'affichage de surface avant, et fournir un écran d'exécution pour un appel vidéo d'une application d'appel par la zone d'affichage de surface avant, et
dans un cas où la distance de déplacement détectée est inférieure à la valeur de référence, commander le circuit d'entraînement de sorte qu'une partie de la zone d'affichage de surface arrière soit déplacée vers la surface avant, élargissant ainsi la zone d'affichage de surface avant, et fournir un écran d'exécution pour un appel vocal de l'application d'appel par l'affichage de surface avant.

11. Équipement électronique portable selon la revendication 9, dans lequel les instructions amènent le processeur à :
détecter, à l'aide d'un capteur de pression, l'intensité d'une force générée par une pression exercée sur le bouton d'appel,
dans un cas où l'intensité détectée de la force est égale ou supérieure à une valeur de référence, commander le circuit d'entraînement de sorte que toute la zone d'affichage de surface arrière soit déplacée vers la surface avant, élargissant ainsi la zone d'affichage de surface avant, et fournir un écran d'exécution pour un appel vidéo d'une application d'appel par la zone d'affichage de surface avant, et
dans un cas où l'intensité détectée de la force est inférieure à la valeur de référence, commander le circuit d'entraînement de sorte qu'une partie de la zone d'affichage de surface arrière soit déplacée vers la surface avant, élargissant ainsi la zone d'affichage de surface avant, et fournir un écran d'exécution pour un appel vocal de l'application d'appel par l'affichage de surface avant.

12. Procédé d'opération d'un équipement électronique portable, le procédé comprenant :
identifier, sur la base de données reçues depuis un capteur de l'équipement électronique portable, qu'une surface arrière de l'équipement électronique portable est positionnée au-dessus d'une surface avant de l'équipement électronique portable, le capteur comprenant au moins l'un d'un capteur gyroscopique et d'un capteur d'accélération ;
lorsque la surface arrière est positionnée au-dessus de la surface avant, fournir une notification concernant un message reçu depuis un équipement électronique externe par l'intermédiaire d'un circuit de communication sans fil de l'équipement électronique portable par une zone d'affichage d'un afficheur flexible de l'équipement électronique portable positionnée sur la surface arrière ;
identifier, sur la base de données reçues depuis le capteur, que la surface avant est positionnée au-dessus de la surface arrière ;
fournir la notification par une zone d'affichage de l'afficheur flexible positionnée sur la surface avant en fonction d'une transition d'un état dans lequel la surface arrière est positionnée au-dessus de la surface avant à un état dans lequel la surface avant est positionnée au-dessus de la surface arrière ;
commander un circuit d'entraînement de l'équipement électronique portable de sorte que la zone d'affichage de l'afficheur flexible positionnée sur la surface arrière soit déplacée et disposée sur la surface avant en fonction des informations de sélection concernant la notification dans un état dans lequel la surface avant est positionnée au-dessus de la surface arrière, élargissant ainsi une zone d'affichage de surface avant de l'équipement électronique portable ; et
fournir un élément d'interface utilisateur, UI, lié à la notification en fonction des informations de sélection par une zone d'affichage élargie vers la surface avant de l'équipement électronique portable.

13. Procédé selon la revendication 12, comprenant en outre fournir un effet visuel simulant un déplacement de la notification d'une zone d'affichage de surface arrière de l'équipement électronique portable vers une zone d'affichage de surface avant de l'équipement électronique portable par une zone d'affichage de surface latérale de l'équipement électronique portable en fonction d'une transition d'un état dans lequel la surface arrière est positionnée au-dessus de la surface avant à un état dans lequel la surface avant est positionnée au-dessus de la surface arrière.

14. Équipement électronique portable (101, 200, 300), comprenant :
un boîtier coulissant comprenant un premier boîtier (210) et un deuxième boîtier (220) ;
un élément d'entraînement configuré pour qu'une partie mobile vers l'intérieur du deuxième boîtier soit déplacée jusqu'à l'intérieur du premier boîtier ou déplacée hors du premier boîtier ;
un circuit d'entraînement (325) comprenant un moteur et configuré pour faire tourner ou déplacer l'élément d'entraînement à l'aide du moteur ;
un afficheur flexible (230) disposé sur une surface avant de l'équipement électronique dans un état coulissant vers l'extérieur dans lequel la partie mobile vers l'intérieur est déplacée hors du premier boîtier, une partie de l'afficheur flexible étant déplacée vers une surface arrière de l'équipement électronique portable par une surface latérale de l'équipement électronique portable et disposée sur celle-ci en fonction d'une transition d'un état coulissant vers l'intérieur dans lequel la partie mobile vers l'intérieur est déplacée jusqu'à l'intérieur du premier boîtier ;
un circuit de communication sans fil (192) ;
un capteur (320) comprenant au moins l'un d'un capteur gyroscopique et d'un capteur d'accélération, le capteur (320) étant configuré pour générer des données correspondant à une position relative entre la surface avant et la surface arrière et pour fournir les données ;
un processeur (120, 399) connecté de manière opérationnelle au circuit de communication sans fil, au capteur et à l'afficheur ; et
une mémoire (130, 330) connecté au processeur,
dans lequel la mémoire stocke des instructions qui, lorsqu'elles sont exécutées, amènent le processeur à :
fournir une première notification de demande d'appel par une zone d'affichage positionnée sur la surface latérale dans un cas où un message de demande d'appel est reçu depuis un équipement électronique externe par l'intermédiaire du circuit de communication sans fil lorsque le boîtier coulissant est dans l'état coulissant vers l'extérieur, et lorsque la surface arrière est positionnée au-dessus de la surface avant, et
transmettre un premier message de refus d'appel vers l'équipement électronique externe par l'intermédiaire du circuit de communication sans fil dans un cas où un déplacement vers l'intérieur de la partie mobile vers l'intérieur jusqu'à l'intérieur du premier boîtier est détecté par le capteur dans un état dans lequel la surface arrière est positionnée au-dessus de la surface avant.

15. Équipement électronique portable selon la revendication 14, dans lequel les instructions amènent le processeur à :
détecter une réponse utilisateur destinée à retourner l'équipement électronique portable lorsque le boîtier coulissant est toujours dans l'état coulissant vers l'extérieur, sur la base des données reçues depuis le capteur,
fournir une deuxième notification de demande d'appel par une zone d'affichage positionnée sur la surface avant en fonction de la réponse utilisateur, et
transmettre un deuxième message de refus d'appel par l'intermédiaire du circuit de communication sans fil vers l'équipement électronique externe dans un cas où un déplacement vers l'intérieur de la partie mobile vers l'intérieur jusqu'à l'intérieur du premier boîtier est détecté par le capteur dans un état dans lequel la surface avant est positionnée au-dessus de la surface arrière.
